# FASCICULE DE BREVET EUROPEEN

(11) **EP 3 090 456 B1**
(45) Date de publication et mention de la délivrance du brevet: **26.12.2018**
(21) Numéro de dépôt: 14789228.5
(22) Date de dépôt: 22.10.2014
(51) Int. Cl.: H01M 4/36, H01M 4/505, H01M 4/525, H01M 4/58, H01M 10/0525

(54) **ÉLECTRODE POUR BATTERIE DE STOCKAGE D'ÉNERGIE ÉLECTRIQUE COMPRENANT UN MATÉRIAU CONSTITUÉ DE LIFEPO4 ET D'AU MOINS DEUX AUTRES COMPOSÉS PARTICULIERS**
ELEKTRODE FÜR EINE STROMSPEICHERBATTERIE MIT EINEM MATERIAL AUS LIFEPO4 UND MINDESTENS ZWEI ANDEREN SPEZIELLEN VERBINDUNGEN
ELECTRODE FOR AN ELECTRICAL ENERGY STORAGE BATTERY, COMPRISING A MATERIAL CONSISTING OF LIFEPO4 AND AT LEAST TWO OTHER PARTICULAR COMPOUNDS

(30) Priorité: 22.10.2013 FR 1360271
(43) Date de publication de la demande: 09.11.2016
(73) Titulaire: Renault S.A.S., 92100 Boulogne-Billancourt (FR)
(72) Inventeur: DELOBEL, Bruno, F-75015 Paris (FR)
(86) Numéro de dépôt international: PCT/EP2014/072615
(87) Numéro de publication internationale: WO 2015/059176

(56) Documents cités:
- EP-A1- 2 642 577
- EP-A2- 2 555 286
- WO-A1-2013/016426
- US-A1- 2007 037 056
- US-A1- 2007 254 209
- US-A1- 2012 097 905
- US-A1- 2013 216 914

## Description

La présente invention se rapporte à une électrode pour batterie de stockage d'énergie électrique comprenant un matériau constitué de trois composés spécifiques, ainsi qu'à un dispositif de stockage d'énergie ou batterie comprenant une telle électrode.

Les batteries lithium-ion se sont largement imposées dans les domaines de l'électronique grand public et dans l'automobile.

En effet, elles permettent notamment d'envisager le développement de véhicules électriques présentant une autonomie supérieure à 200 km.

Les batteries lithium-ion sont constituées d'un assemblage en série et en parallèle de cellules lithium-ion de stockage d'énergie électrique.

Chaque cellule contient une électrode négative et une électrode positive. Pendant la décharge, les ions lithium se déplacent de l'électrode négative vers l'électrode positive, et pendant la charge de l'électrode positive vers l'électrode négative.

Dans le domaine des véhicules automobiles, afin de favoriser le développement des véhicules à traction électrique ou hybride et leur diffusion auprès d'un large public, le coût des batteries doit diminuer mais en parallèle leur durée de vie et leurs performances doivent augmenter.

Ainsi, les batteries doivent être capables de fournir à la fois une énergie importante afin de maximiser l'autonomie mais aussi de fournir une puissance importante, par exemple dans le cas de l'accélération d'un véhicule.

Par exemple, les véhicules purement électriques (Electric Vehicule - EV) nécessitent de disposer de batteries qui leur permettent une grande autonomie et donc qui leur apportent une énergie importante.

D'un autre côté, les véhicules électriques hybrides (Hybrid Electric Vehicule - HEV) ont besoin de batteries qui leur apportent de la puissance puisqu'ici les batteries viennent ponctuellement en remplacement ou en complément du moteur thermique.

Le développement actuel des batteries lithium-ion vise donc à augmenter à la fois la densité énergétique mais aussi la puissance.

Les développements récents ont vu émerger de nouveaux matériaux d'électrode comprenant un mélange de différents composés.

L'utilisation de matériaux comprenant du LiFePO₄ (LFP) en association avec des oxydes de métaux de transition riches en manganèse et en lithium (LMR-NMC) comme matériau d'électrode est très prometteur.

En effet, les batteries fabriquées à partir des électrodes comprenant ces matériaux présentent une densité d'énergie importante, une puissance importante et un coût maitrisé.

Gallagher et al (Journal of Power Sources, 196 (2011) 9702-9707) ont par exemple développé une électrode positive comprenant un matériau constitué de LiFePO₄ et d'un composé du type LiNiₓMn_{y}Co_{z}O₂ (NMC). Ce type d'électrode présente de bonnes propriétés en termes de puissance et de densité d'énergie.

Le principal problème de cette technologie est qu'elle présente un saut de potentiel lors de la variation de l'état de charge au cours de la charge ou de la décharge de la cellule.

En effet, à état de charge élevé (et donc à potentiel d'utilisation élevé), c'est le composé du type NMC qui assure l'essentiel des réactions électrochimiques dans l'électrode.

En revanche, lorsque l'état de charge diminue (et donc le potentiel), le composé LFP prend le relais et assure l'essentiel des réactions électrochimiques dans l'électrode.

Cette transition des réactions électrochimiques d'un composé à un autre entraîne des sauts de potentiels.

Ces sauts de potentiels entraînent des appels de courants concomitants à une augmentation de la température de la cellule due à l'effet Joule.

En effet, le passage d'un matériau à un autre se traduit par une augmentation de la résistance de la cellule.

Les conséquences de ce saut de potentiel de l'ordre de quelques centaines de millivolts par cellule prennent des proportions importantes dans le cas d'une batterie qui peut comporter des centaines de cellules. Les sauts de potentiels alors mesurés peuvent être de l'ordre de plusieurs dizaines de volts.

Cela a pour conséquence une augmentation importante de la température de la batterie ce qui peut entraîner sa détérioration.

De plus, une variation rapide d'une dizaine de volts peut modifier le fonctionnement des équipements alimentés, ou même les détériorer. Les documents EP 2 642 577 A1, EP 2 555 286 A2, WO 2013/016426 A1, US 2007/254209 A1, US 2013/216914 A1 et US 2012/097905 A1 décrivent des matériaux actifs comprenant une combinaison de LiFePO₄ et d'un autre oxyde de lithium et de métal de transition.

La présente invention vise donc à limiter les variations de potentiel rapide en lissant la courbe de potentiel afin de limiter les chutes (ou les augmentations) brutales de potentiel.

In fine, le but de l'invention est de réduire la résistance interne de l'électrode positive au cours d'un cycle charge/décharge.

La demanderesse a découvert que l'on pouvait disposer d'une électrode positive ne présentant pas les inconvénients ci-dessus mentionnés avec un matériau constitué de LiFePO₄ et d'au moins deux autres composés particuliers.

L'invention a donc pour objet une électrode pour batterie de stockage d'énergie électrique telle que définie dans la revendication 1

L'électrode selon l'invention présente une courbe de potentiel lissée en fonction du temps.

Par conséquent, les variations de potentiels sont moins rapides.

Cela conduit aussi à une électrode qui présente une résistance plus faible qu'une électrode ne comprenant que deux composés.

Par conséquent l'échauffement des batteries contenant de telles électrodes est moindre au cours des cycles de charge et de décharge.

La dégradation des batteries est donc limitée.

Enfin, la variation du potentiel au cours du temps, puisque plus faible, est mieux supportée par les équipements électriques alimentés par ce type de batterie. La dégradation des équipements est donc limitée.

D'autres avantages et caractéristiques de l'invention apparaîtront plus clairement à l'examen de la description détaillée et des dessins annexés sur lesquels :
- la figure 1 représente l'évolution du potentiel d'une électrode positive selon l'invention et d'une électrode positive de l'art antérieur en fonction du temps et
- la figure 2 représente l'évolution de la résistance normalisée d'une électrode positive selon l'invention et d'une électrode positive de l'art antérieur en fonction de l'état de charge.

Le premier composé du matériau de l'électrode selon l'invention est le composé LiFePO₄.

Le premier composé représente de 1 à 40 % en poids, de préférence de 5 à 30 % en poids, et en particulier de 10 à 20 % en poids, par rapport au poids total du matériau.

Lesdits au moins deux seconds composés comprennent le composé LiNi_{1/3}Mn_{1/3}Co_{1/3}O₂ et le composé Li_{1,15}(Ni_{1/3}Mn_{1/3}Co_{1/3})_{0,85}O₂.

Lesdits au moins deux seconds composés représentent de 30 à 95 % en poids, de préférence de 40 à 90 % en poids, et en particulier de 60 à 85 % en poids, par rapport au poids total du matériau.

Dans une autre variante de l'invention, lesdits au moins deux seconds composés sont enrobés par un oxyde d'aluminium, de zirconium, de silicium ou par du phosphate d'aluminium.

Avantageusement, ledit premier second composé représente de 30 à 90 % en poids, de préférence de 40 à 80 % en poids, et en particulier de 50 à 70 % en poids par rapport au poids total du matériau.

Ledit deuxième second composé représente de 1 à 50 % en poids, de préférence de 5 à 30 % en poids, et en particulier de 10 à 20 % en poids par rapport au poids total du matériau.

Avantageusement, le ratio pondéral dudit premier second composé sur ledit deuxième second composé est compris entre 1 et 10, de préférence entre 2 et 6, et en particulier entre 3 et 5.

L'électrode selon l'invention peut comprendre en outre un ou plusieurs composés conducteurs.

Le ou les composés conducteurs peuvent être choisis parmi le carbone, par exemple sous la forme de graphite, de noir de carbone, de fibres de carbone, de nanofils de carbone, de nanotubes de carbone, de nanosphères de carbone ; les polymères conducteurs électroniques ; et leurs mélanges.

Le ou les composés conducteurs peuvent représenter de 0,1 à 10 % en poids, de préférence de 0,5 à 8 % en poids, mieux de 2 à 6 % en poids, par rapport au poids total de l'électrode.

Les électrodes de la cellule peuvent encore comprendre un liant.

Le liant peut être choisi parmi les polymères organiques, et plus particulièrement parmi les polytétrafluoroéthylènes (PTFE), les poly(fluorure de vinylidène) (PVDF), les copolymères PVDF-HFP (hexafluorure de propylène) ; les polyéthers ; les polyesters ; les polyméthacrylates de méthyle ; les polyacrylonitriles ; et les élastomères et caoutchoucs naturels ou synthétiques tels que le caoutchouc styrène-butadiène et le carboxyméthylcellulose-caoutchouc styrène/butadiène (CMC-SBR).

Le liant, lorsqu'il est présent, peut représenter de 1 à 10 % en poids, de préférence de 2 à 8 % en poids, et en particulier de 3 à 7 % en poids, par rapport au poids total de l'électrode.

Les électrodes de la cellule qui viennent d'être décrites sont généralement préparées par mélange des composés ci-dessus décrits dans un solvant.

Ce solvant peut notamment être choisi parmi la N-méthyl-2-pyrrolidone et l'eau dans le cas du CMC-SBR.

Le ratio pondéral du solvant sur le mélange total est généralement compris entre 0,05 et 0,9.

L'encre résultant du mélange du solvant et des matériaux décrits précédemment, complétée le cas échéant, du ou des composés conducteurs et du liant est généralement étalée sur un collecteur de courant.

Le collecteur de courant peut être choisi parmi des feuilles métalliques comprenant des métaux tels que le cuivre, l'aluminium, l'acier, le nickel.

La présente invention est illustrée par l'exemple suivant.

### Exemple

Une électrode positive A selon l'invention et une électrode positive B comparative sont préparées dans les proportions en poids pour chaque ingrédient selon le tableau ci-dessous :

| **Ingrédients** | **Electrode A (invention)** | **Electrode B (comparative)** |
|---|---|---|
| LiFePO₄ | 15 % | 18 % |
| LiNi_{1/3}Mn_{1/3}Co_{1/3}O₂ | 60 % | 72 % |
| Li_{1,15}(Ni_{1/3}Mn_{1/3}Co_{1/3})_{0,85}O₂ | 15 % | - |
| Carbone conducteur | 5 % | 5 % |
| Liant⁽¹⁾ | 5 % | 5 % |

### (1) poly(fluorure de vinylidène-co-hexafluoropropylène) - (PVDF-HFP)

Tous les ingrédients de chaque composition sont mélangés à de la N-méthyl-2-pyrrolidone afin de créer une encre. Le ratio pondéral du solvant sur l'encre est de 0,7.

L'encre ainsi formée est ensuite étalée sur un collecteur de courant et séchée à 150°C pendant 24°C.

Deux électrodes négatives identiques sont préparées dans les proportions en poids pour chaque ingrédient selon le tableau ci-dessous :

| **Ingrédients** | **Electrodes négatives** |
|---|---|
| Graphite | 90 % |
| Carbone conducteur | 5 % |
| Liant | 5 % |

Les électrodes négatives sont fabriquées de la même manière que les électrodes positives ci-dessus.

Une cellule de stockage de l'énergie électrique selon l'invention est préparée à partir de l'électrode positive A et d'une électrode négative décrite ci-dessus.

Une cellule de stockage de l'énergie électrique comparative est préparée à partir de l'électrode positive B et d'une électrode négative décrite ci-dessus.

Les électrodes sont assemblées avec un séparateur de 15 µm en polypropylène et le tout est imbibé d'électrolyte (LiPF₆ à 1 mol/L) dans un mélange carbonate d'éthylène/carbonate de diéthyle d'un ratio pondéral de 3 pour 7. Les propriétés des cellules ainsi obtenues sont comparées. Les résultats sont rassemblés dans les figures annexées 1 et 2.

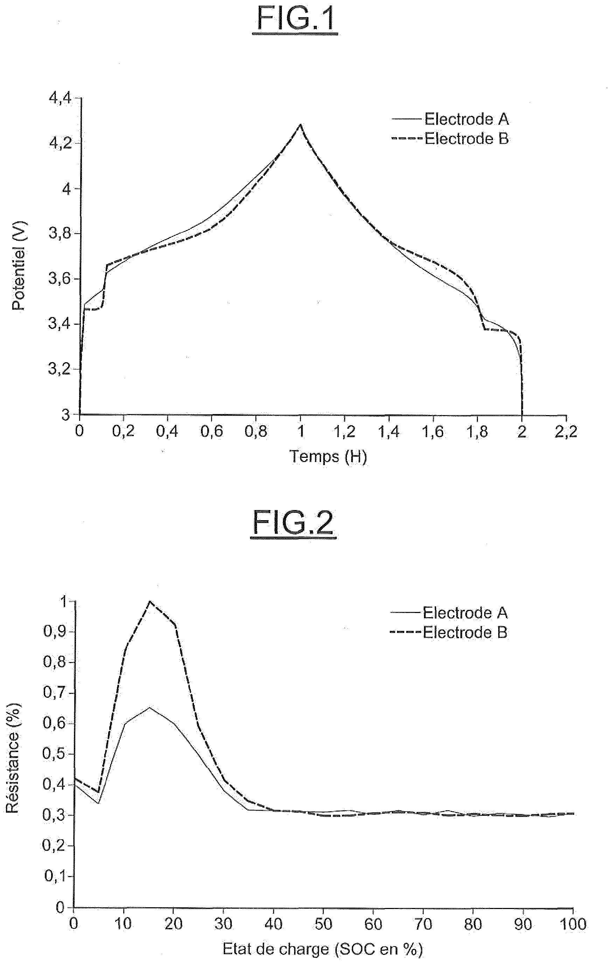

La figure 1 représente l'évolution du potentiel en volt, des électrodes positives des cellules préparées en fonction du temps, mesuré en heures.

La courbe en continu représente l'évolution du potentiel de l'électrode A dans la cellule correspondante en fonction du temps.

La courbe en pointillé représente l'évolution du potentiel de l'électrode B dans la cellule correspondante en fonction du temps.

La courbe de potentiel de l'électrode A est plus aplanie que la courbe de potentiel de l'électrode B.

La variation du potentiel de l'électrode A en fonction du temps est moins rapide que la variation du potentiel de l'électrode B en fonction du temps.

Cette diminution de la variation du potentiel de l'électrode selon l'invention se traduit dans les courbes de la figure 2.

La figure 2 représente l'évolution des résistances normalisées des électrodes positives des cellules préparées ci-dessus en fonction de l'état de charge (SOC) de la cellule.

La courbe en continu représente l'évolution de la résistance normalisée de l'électrode A en fonction de l'état de charge de la cellule correspondante.

La courbe en pointillé représente l'évolution de la résistance normalisée de l'électrode B en fonction de l'état de charge de la cellule correspondante.

La résistance normalisée de l'électrode selon l'invention est beaucoup moins importante que la résistance normalisée de l'électrode comparative.

Par conséquent, la chaleur produite par effet Joule dans la l'électrode A selon l'invention est beaucoup moins importante que pour l'électrode B comparative.

### Autre exemple

Des électrodes positives D et E selon l'invention ainsi qu'une électrode comparative C sont préparées dans les proportions en poids pour chaque ingrédient selon le tableau ci-dessous :

| **Ingrédients** | **Electrode C** | **Electrode D** | **Electrode E** |
|---|---|---|---|
| LiFePO₄ | 32 % | 28,8 % | 22,4 % |
| LiNi_{1/3}Mn_{1/3}Co_{1/3}O₂ | 58 % | 52,2 % | 40,6 % |
| Li_{1,15}(Ni_{1/3}Mn_{1/3}Co_{1/3})_{0,85}O₂ | - | 9% | 27% |
| Carbone conducteur | 5 % | 5 % | 5% |
| Liant⁽¹⁾ | 5 % | 5 % | 5% |

Trois électrodes négatives identiques sont préparées dans les mêmes proportions en poids que l'exemple précédent. A partir de ces trois électrodes négatives, sont préparées deux cellules de stockage de l'énergie électrique selon l'invention à partir des électrodes positives D et E, ainsi qu'une cellule comparative à partir de l'électrode C, toujours par le même procédé d'assemblage que l'exemple précédent.

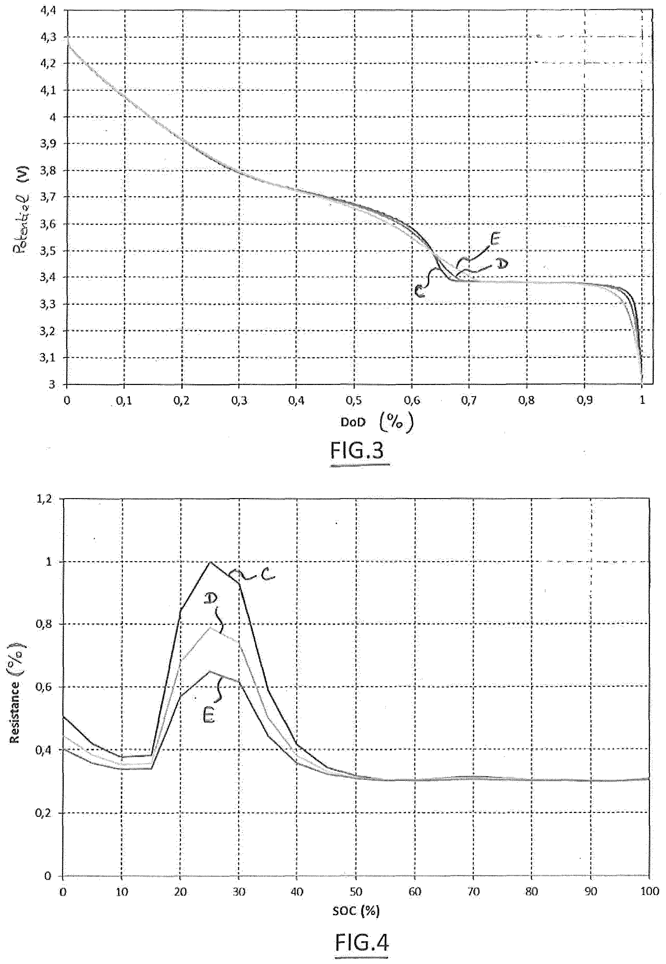

La figure 3 représente l'évolution du potentiel en volt, des électrodes positives C, D et E des cellules ainsi préparées en fonction de la profondeur de décharge (DoD) exprimée de 0% (cellule pleine) à 100% (cellule vide). On constate que la variation du potentiel des électrodes D et E selon l'invention en fonction de la profondeur de décharge est moins rapide que la variation du potentiel de l'électrode comparative C en fonction de la profondeur de décharge.

La figure 4 représente l'évolution des résistances normalisées des électrodes positives C, D et E des cellules ainsi préparées en fonction de l'état de charge (SOC) de la cellule. Comme dans l'exemple précédent, on constate que la résistance normalisée des électrodes D et E selon l'invention est beaucoup moins importante que la résistance normalisée de l'électrode comparative C.

## Revendications

1. Electrode pour batterie de stockage d'énergie électrique comprenant un matériau comprenant un premier composé LiFePO₄ et au moins deux seconds composés différents choisis parmi les composés de formule (I) suivante
Li₁₊ₐ(NiₓMn_{y}Co_{z})₁₋ₐO₂ (I)
où a, x, y et z sont des nombres réels avec 0≤a≤0,3, 0≤x≤1, 0≤y≤1, 0≤z≤1 et x+y+z=1, lesdits au moins deux seconds composés comprennent le composé LiNi_{1/3}Mn_{1/3}Co_{1/3}O₂ et le composé Li_{1,15}(Ni_{1/3}Mn_{1/3}CO_{1/3})_{0,85}O₂, le premier composé représentent de 1 à 40 % en poids, de préférence de 5 à 30 % en poids, et en particulier de 10 à 20 % en poids, par rapport au poids total du matériau et lesdits au moins deux seconds composés représentent de 30 à 95 % en poids, de préférence de 40 à 90 % en poids, et en particulier de 60 à 85 % en poids, par rapport au poids total du matériau, et ledit deuxième second composé représente de 1 à 50 % en poids, de préférence de 5 à 30 % en poids, et en particulier de 10 à 20 % en poids par rapport au poids total du matériau.

2. Electrode selon la revendication précédente, **caractérisée en ce que** lesdits au moins deux seconds composés sont enrobés par un oxyde d'aluminium, de zirconium, de silicium ou par du phosphate d'aluminium.

3. Electrode selon l'une quelconque des revendications précédentes, **caractérisée en ce que** ledit premier second composé représente de 30 à 90 % en poids, de préférence de 40 à 80 % en poids, et en particulier de 50 à 70 % en poids par rapport au poids total du matériau.

4. Electrode selon larevendication 3, **caractérisée en ce que** le ratio pondéral dudit premier second composé sur ledit deuxième second composé est compris entre 1 et 10, de préférence entre 2 et 6, et en particulier entre 3 et 5.

5. Cellule lithium-ion de stockage de l'énergie électrique comprenant une électrode négative et une électrode positive, ladite électrode positive étant telle que définie dans l'une quelconque des revendications précédentes.

6. Batterie lithium-ion comprenant une ou plusieurs cellules telle que définies dans la revendication 5.

## Patentansprüche

1. Elektrode für eine Stromspeicherbatterie, umfassend ein Material, umfassend eine erste Verbindung LiFePO₄ und mindestens zwei zweite andere Verbindungen, ausgewählt aus den Verbindungen mit der folgenden Formel (I):
Li₁₊ₐ(NiₓMn_{y}Co_{z})₁₋ₐO₂ (I)
wobei a, x, y und z reelle Zahlen sind, wobei 0≤a≤0,3, 0≤x≤1, 0≤y≤1, 0≤z≤1 und x+y+z=1, wobei die mindestens zwei zweiten Verbindungen die Verbindung LiNi_{1/3}Mn_{1/3}Co_{1/3}O₂ und die Verbindung Li_{1,15}(Ni_{1/3}Mn_{1/3}Co_{1/3})_{0,85}O₂ umfassen, wobei die erste Verbindung von 1 bis 40 Gew.-%, vorzugsweise von 5 bis 30 Gew.-% und insbesondere von 10 bis 20 Gew.-%, bezogen auf das Gesamtgewicht des Materials, darstellt, und die mindestens zwei zweiten Verbindungen von 30 bis 95 Gew.-%, vorzugsweise von 40 bis 90 Gew.-% und insbesondere von 60 bis 85 Gew.-%, bezogen auf das Gesamtgewicht des Materials, darstellen, und wobei die zweite Verbindung von 1 bis 50 Gew.-%, vorzugsweise von 5 bis 30 Gew.-% und insbesondere von 10 bis 20 Gew.-%, bezogen auf das Gesamtgewicht des Materials, darstellt.

2. Elektrode nach dem vorhergehenden Anspruch, **dadurch gekennzeichnet, dass** die mindestens zwei zweiten Verbindungen mit einem Aluminium-, Zirconium-, Siliciumoxid oder mit Aluminiumphosphat umhüllt sind.

3. Elektrode nach einem der vorhergehenden Ansprüche, **dadurch gekennzeichnet, dass** die erste zweite Verbindung von 30 bis 90 Gew.-%, vorzugsweise von 40 bis 80 Gew.-% und insbesondere von 50 bis 70 Gew.-%, bezogen auf das Gesamtgewicht des Materials, darstellt.

4. Elektrode nach Anspruch 3, **dadurch gekennzeichnet, dass** das Gewichtsverhältnis der ersten zweiten Verbindung zur zweiten Verbindung zwischen 1 und 10, vorzugsweise zwischen 2 und 6 und insbesondere zwischen 3 und 5, beträgt.

5. Lithiumionen-Stromspeicherzelle, umfassend eine negative Elektrode und eine positive Elektrode, wobei die positive Elektrode wie in einem der vorhergehenden Ansprüche definiert ist.

6. Lithiumionen-Batterie, umfassend eine oder mehrere Zellen, wie in Anspruch 5 definiert.

## Claims

1. Electrode for an electrical energy storage battery comprising a material comprising a first compound LiFePO₄ and at least two different second compounds chosen from the compounds of following formula (I):
Li₁₊ₐ(NiₓMn_{y}Co_{z})₁₋ₐO₂ (I)
where a, x, y and z are real numbers with 0≤a≤0.3, 0≤x≤1, 0≤y≤1, 0≤z≤1 and x+y+z=1, said at least two second compounds comprise the compound LiNi_{1/3}Mn_{1/3}Co_{1/3}O₂ and the compound Li_{1.15}(Ni_{1/3}Mn_{1/3}Co_{1/3})_{0.85}O₂, the first compound represents from 1 to 40% by weight, preferably from 5 to 30% by weight and in particular from 10 to 20% by weight, with respect to the total weight of the material, and said at least two second compounds represent from 30 to 95% by weight, preferably from 40 to 90% by weight and in particular from 60 to 85% by weight, with respect to the total weight of the material, and said at least two second compounds represent from 30 to 95% by weight, preferably from 40 to 90% by weight in particular from 60 to 85% by weight, with respect to the total weight of the material, and said second compound represents from 1 to 50% by weight, preferably from 5 to 30% by weight and in particular from 10 to 20% by weight, with respect to the total weight of the material.

2. Electrode according to the preceding claim, **characterized in that** said at least two second compounds are coated with an aluminium, zirconium or silicon oxide or with aluminium phosphate.

3. Electrode according to either one of the preceding claims, **characterized in that** said first second compound represents from 30 to 90% by weight, preferably from 40 to 80% by weight and in particular from 50 to 70% by weight, with respect to the total weight of the material.

4. Electrode according to Claim 3, **characterized in that** the ratio by weight of said first second compound to said second compound is between 1 and 10, preferably between 2 and 6 and in particular between 3 and 5.

5. Lithium-ion cell for the storage of electrical energy comprising a negative electrode and a positive electrode, said positive electrode being as defined in any one of the preceding claims.

6. Lithium-ion battery comprising one or more cells as defined in Claim 5.
